# EUROPEAN PATENT APPLICATION

(11) **EP 2 938 031 A1**
(43) Date of publication of application: **28.10.2015**
(21) Application number: 13865417.3
(22) Date of filing: 18.10.2013
(51) Int. Cl.: H04L 12/801

(54) **SERVICE OFFLOAD METHOD AND DEVICE FOR ACCESSING INTERNET**

(30) Priority: 21.12.2012 CN 201210563410
(71) Applicant: ZTE Corporation, Shenzhen, Guangdong 518057 (CN)
(72) Inventor: TANG, Delong, Shenzhen Guangdong 518057 (CN)
(74) Representative: Price, Nigel John King
(86) International application number: PCT/CN2013/085469
(87) International publication number: WO 2014/094490

(57) **Abstract**

Provided is a service offloading method for accessing the Internet. The method includes if it is detected that a message is to be sent currently, and it is determined that address conversion needs to be performed on the message according to an offloading policy, the message is sent in a corresponding Internet access manner after a source IP address in the message to be sent is modified; and if it is detected that a message is received currently, and it is determined that the received message needs to be corrected, the message is processed after a target address of the received message is corrected. A service offloading device for accessing the Internet is also provided. Internet access manners with different QOS attributes can be provided for application programs, thereby guaranteeing the QOS of services, and then improving the user experience.

## Description

### TECHNICAL FIELD

The present disclosure relates to a technology of accessing the Internet in the mobile communication field, and in particular to a service offloading method and device for accessing the Internet.

### BACKGROUND

At present, wireless operators operate a complete Third Generation Partnership Project (3GPP) network; the 3GPP network includes an access network, a core network and a corresponding perfect Quality of Service (QOS) managing and controlling policy; meanwhile, the wireless operators operate one or more low-value networks, for example, a simplified core network and a complete 3GPP access network, or an independent Wireless Local Area Network (WLAN), the QOS attribute of such a network is relatively poor.

With the constant development of wireless communication technology and wire communication technology, manners employed by the operators and users to access the Internet are more and more abundant, and the users can select, through User Equipment (UE), one from multiple wireless accessing manners to access the Internet. However, since different accessing manners correspond to different QOS attributes, a situation that a valuable service uses an accessing manner with a relatively poor QOS attribute, but a valueless service uses an accessing manner with a relatively good QOS attribute may occur, which reduces the user experience and influences the QOS.

It can be seen that, in the prior art, the manners of accessing the Internet can only be manually selected by users, and the manners of accessing the Internet with different QOS attributes cannot be provided respectively according to values of services, therefore, the QOS of services cannot be guaranteed, and the user experience cannot be improved.

### SUMMARY

In view of this, the present disclosure is intended to provide a service offloading method and device for accessing the Internet, which can guarantee the QOS of services accessing the Internet, and then improve the user experience.

To this end, the technical solutions of the present disclosure are implemented as follows.

A service offloading method for accessing the Internet is provided, which includes that:
if it is detected that a message is to be sent currently, and it is determined that address conversion needs to be performed on the message according to an offloading policy, then the message is sent in a corresponding Internet access manner after a source Internet Protocol (IP) address in the message to be sent is modified; and
if it is detected that a message is received currently, and it is determined that the received message needs to be corrected, the received message is processed after a target address of the received message is corrected.

In the above solution, the offloading policy may include one or multiple entries, wherein each of the one or more entries includes a service identity and a Internet access manner corresponding to the service.

In the above solution, the step that if it is determined that address conversion needs to be performed on the message according to the offloading policy, the message is sent in a corresponding Internet access manner after a source IP address in the message to be sent is modified may include that: a service identity of the message is extracted, an entry corresponding to the service identity is extracted from the offloading policy, a local IP address of the message is extracted, and whether an interface IP address of UE recorded in the entry is the same as the local IP address is checked; if the same, then the message is sent directly in the corresponding Internet access manner; if not the same, then the message is sent in the corresponding Internet access manner after the local IP address in the message is converted to the interface IP address of the UE recorded in the entry.

In the above solution, the step of processing the received message after a target address of the received message is corrected may include that: a service identity is extracted from the received message, a set IP address is checked according to the service identity, and whether a local IP address in the message is the same as the set IP address is determined; if the same, the received message is processed directly; if not the same, the received message is processed after the target IP address in the received message is replaced with a bound IP address.

A service offloading device for accessing the Internet is also provided, which includes an offloading module, a service processing module and a wireless interface module; wherein,
the offloading module is configured to, if it is determined that the message is to be sent currently when the message sent from the service processing module is detected, and it is determined that address conversion needs to be performed on the message according to the offloading policy, send the message to the wireless interface module after the source IP address in the message is modified; the offloading module is configured to, if it is determined that a message is received currently when the message sent from the wireless interface module is detected, and it is determined that the received message needs to be corrected, send the received message to the service processing module after the target address of the received message is corrected;
the service processing module is configured to send the message to be sent to the offloading module, and process the message sent from the offloading module; and
the wireless interface module is configured to send the received message to the offloading module, and send the message sent from the offloading module in a corresponding Internet access manner.

In the above solution, the offloading module includes: an offloading determination sub-module which is configured to save the offloading policy; wherein the offloading policy includes one or multiple entries, and each of the one or multiple entries includes the service identity and the Internet access manner corresponding to a service.

In the above solution, the offloading module further may include an address converting sub-module which is configured to receive the message sent from the offloading determination sub-module and an offloading policy entry corresponding to the message, and send the message to the wireless interface module after converting the local IP address to the interface IP address of UE recorded in the entry;
correspondingly, the offloading determination sub-module is configured to extract a service identity of the message sent from the service processing module, extract from the offloading policy the entry corresponding to the service identity, extract the local IP address of the message, and check whether the interface IP address of the UE recorded in the entry is the same as the local IP address; if the same, then send the message to the wireless interface module; if not the same, then send the message and the offloading policy entry corresponding to the message to the address converting sub-module.

In the above solution, the offloading determination sub-module may be configured to extract the service identity from the message received from the wireless interface module, check a set IP address according to the service identity, and determine whether the local IP address in the message is the same as the set IP address; if the same, then send the message to the service processing module; if not the same, then send the message and the set IP address to the address converting sub-module;
correspondingly, the address converting sub-module may be configured to receive the message sent from the offloading determination sub-module and the set IP address, and send the message to the service processing module after replacing the local IP address in the message with the set IP address.

The present disclosure provides a service offloading method and device for accessing the Internet, wherein the method includes that: if it is detected that the message is to be sent currently, and it is determined that address conversion needs to be performed on the message according to the offloading policy, the message is sent after the source IP address in the message is modified; and if it is detected that the message is received currently, and it is determined that the received message needs to be corrected, the message is processed in a corresponding Internet access manner after the target address of the message is corrected. Thus, different manners for accessing the Internet can be selected according to different services, instead of manually setting a Internet access manner of the UE, so that it can be guaranteed to respectively provide the manners of accessing the Internet with different QOS attributes according to values of the services, the quality of service of services is guaranteed, and then the user experience is improved.

### BRIEF DESCRIPTION OF THE DRAWINGS

Fig. 1 is a flowchart of a service offloading method for accessing the Internet according to embodiment 1 of the present disclosure;
Fig. 2 is a structural diagram of a service offloading device for accessing the Internet according to embodiment 2 of the present disclosure;
Fig. 3 is a flowchart of a service offloading method for accessing the Internet according to embodiment 3 of the present disclosure; and
Fig. 4 is a flowchart of a service offloading method for accessing the Internet according to embodiment 4 of the present disclosure.

### DETAILED DESCRIPTION

The main idea of the present disclosure is that: if it is detected that a message is to be sent currently, and it is determined that address conversion needs to be performed on the message according to an offloading policy, the message is sent in a corresponding Internet access manner after a source IP address in the message to be sent is modified; and if it is detected that a message is received currently, and it is determined that the received message needs to be corrected, the message is processed after a target address of the received message is corrected.

The present disclosure is further elaborated below in combination with the accompanying drawings and specific embodiments.

### Embodiment 1

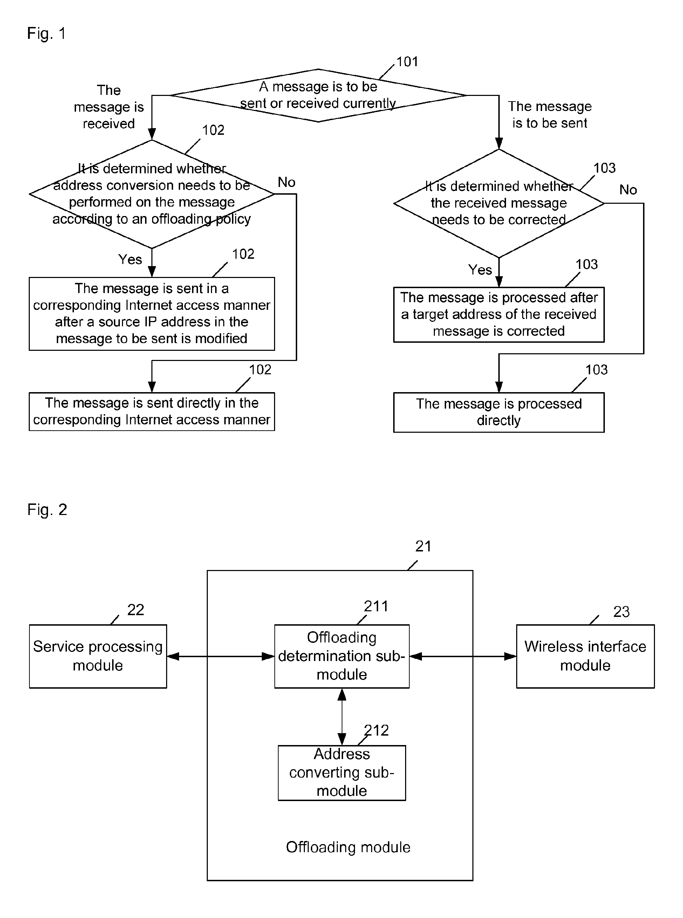

As shown in Fig. 1, the service offloading method for accessing the Internet provided by the present disclosure includes the following steps.

Step 101 includes that it is detected whether a message is received or to be sent currently; if a message is received, step 103 is executed; if a message is to be sent, step 102 is executed.

Here, before step 101 is executed, it is also needed to configure an offloading policy;
wherein the offloading policy includes one or multiple entries; each of the one or more entries includes a service identity and a Internet access manner corresponding to each service;
wherein the service identity can be an IP address, or a port number, or other related information of corresponding equipment, and a detailed illustration is given only to the IP address here; the accessing manner may include WLAN access or 3GPP access and so on; the interface IP address of UE may be used as the identity of the accessing manner; the offloading policy can be configured manually or acquired dynamically from carriers in virtue of an Access Network Discovery and Selection Function (ANDSF).

In addition, if a message is to be sent, before step 102 is executed, the method further includes that after the current UE starts any service, an IP address is bound to the service; when the service needs to access the Internet to send the message to corresponding equipment, the IP address bound to the service is used as the source IP address of the message, and the IP address of the corresponding equipment is selected as the target IP address; and the source IP address and the target IP address are used for writing the message.

Here, binding an IP address to an application program is prior art; it is feasible to call a Berkeley Socket application program interface or an analogue Berkeley Socket application program interface for the application program to establish a Socket, and then bind the IP address through the established Socket.

Step 102 includes that it is determined whether it is necessary to perform the address conversion on the message according to the offloading policy; if necessary, the message is sent in the corresponding Internet access manner after the source IP address in the message to be sent is modified, and the processing flow is ended; or else, the message is sent directly in the corresponding Internet access manner, and the processing flow is ended.

Specifically, the target IP address of the message is extracted, the entry corresponding to the IP address of the corresponding equipment which is the same as the target IP address is extracted from the offloading policy, the source IP address and the local IP address of the message are extracted, and it is checked whether the interface IP address of the UE recorded in the entry is the same as the local IP address; if the same, the message is sent in the corresponding Internet access manner according to the prior art; if not the same, the message is sent in the corresponding Internet access manner after the source IP address in the message is converted to the interface IP address of the UE recorded in the entry. Here, the conversion is the prior art, so it will not be repeated.

Preferably, after step 102 is completed, the UE continues to execute step 101 until there is no message needed to be received or sent in the service.

Step 103 includes that it is determined whether it is necessary to correct the received message; if necessary, the message is processed after the target address of the received message is corrected, and the processing flow is ended; if not, the message is processed directly.

Specifically, the service identity is extracted from the received message, the bound IP address is checked according to the service identity, and it is determined whether the target IP address in the message is the same as the bound IP address; if the same, the message is processed directly; if not the same, the message is processed after the target IP address in the message is replaced with the bound IP address.

Here, processing the message is the prior art, so it will not be repeated.

Preferably, after step 103 is completed, the UE may also continue to execute step 101 until there is no message needed to be received or sent in the service.

### Embodiment 2

As shown in Fig. 2, the present disclosure provides a service offloading device for accessing the Internet; the device includes an offloading module 21, a service processing module 22 and a wireless interface module 23; wherein,
the offloading module 21 is configured to, if it is determined that a message is to be sent currently when the message sent from the service processing module 22 is detected, and it is determined that address conversion needs to be performed on the message according to an offloading policy, send the message to the wireless interface module 23 after the source IP address in the message to be sent is modified; the offloading module 21 is configured to, if it is determined that a message is received currently when the message sent from the wireless interface module 23 is detected, and it is determined that the received message needs to be corrected, send the received message to the service processing module 22 after the target address of the received message is corrected;
the service processing module 22 is configured to send the message to be sent to the offloading module 21, and process the message sent from the offloading module 21; and
the wireless interface module 23 is configured to send the received message to the offloading module 21, and send the message sent from the offloading module 21 in a corresponding Internet access manner.

The service processing module 22 is configured to, after any service is started, bind the service with an IP address; when the service needs to access the Internet to send the message to corresponding equipment, the IP address bound to the service is used as the source IP address of the message, and the IP address of the corresponding equipment is selected as the target IP address; the source IP address and the target IP address are used for writing the message, and the message is sent to the offloading module 21.

The offloading module 21 includes an offloading determination sub-module 211 which is configured to save the offloading policy; wherein the offloading policy includes one or multiple entries; and each of the one or more entries includes a service identity and a Internet access manner corresponding to each service; wherein the service identity may be an IP address, or a port number, or other related information of the corresponding equipment; the accessing manner may include WLAN access or 3GPP access and so on; the interface IP address of the UE may be used as the identity of the accessing manner; the offloading policy may be configured manually or acquired dynamically from operators in virtue of the ANDSF.

The offloading module 21 further includes an address converting sub-module 212 which is configured to receive the message sent from the offloading determination sub-module 211 and the local IP address conforming to the offloading policy; correspondingly, the offloading determination sub-module 211 is configured to determine whether address conversion is needed to be performed on the message to be sent according to the offloading policy; if needed, then send the message to an address modifying module, or else, send the message to the wireless interface module 23.

The offloading determination sub-module 211 is configured to extract the service identity of the message sent from the service processing module, extract from the offloading policy an entry corresponding to the service identity, extract the source IP address of the message, and check whether the interface IP address of the UE recorded in the entry is the same as the source IP address, if the same, then send the message to the wireless interface module 23, if not the same, then send the message and the offloading policy entry corresponding to the message to the address converting sub-module 212; correspondingly, the address converting sub-module 212 is configured to receive the message sent from the offloading determination sub-module 211 and the offloading policy entry corresponding to the message, and send the message to the wireless interface module 23 after converting the local IP address of the message to the interface IP address of the UE recorded in the entry.

The offloading determination sub-module 211 is configured to determine whether the received message is needed to be corrected, if needed, then send the message to the address converting sub-module 212, if not needed, then directly send the message to an operating system module 22; correspondingly, the address converting sub-module 212 is configured to send the message to the operating system module 22 after correcting the target IP address of the message sent from the offloading determination sub-module 211.

The offloading determination sub-module 211 is configured to extract from the received message the identity of an application program, check the IP address bound to the application program according to the identity of the application program, and determine whether the target IP address in the message is the same as the bound IP address, if the same, then send the message to the operating system module 22, if not the same, send the message to the address converting sub-module 212; correspondingly, the address converting sub-module 212 is configured to send the message to the operating system module 22 after replacing the target IP address in the message with the bound IP address.

The above device may be installed in the UE as a logical module. Both the offloading module and the service processing module may be implemented by a Central Processing Unit (CPU), or a Digital Signal Processor (DSP), or an Application Specific Integrated Circuit (ASIC) in the UE; the wireless interface module may be implemented by an antenna, or a combination of antenna and CPU, or the DSP or the ASIC.

### Embodiment 3

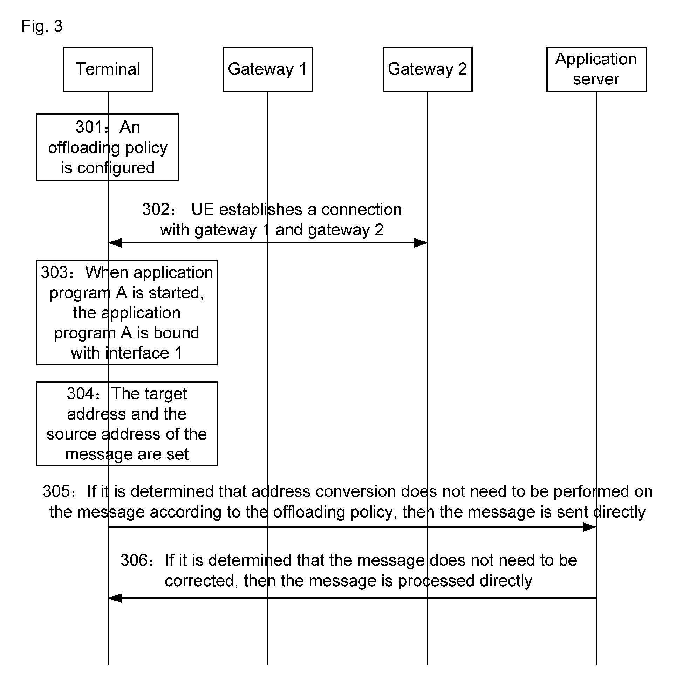

As shown in Fig. 3, when the message is to be sent and the source address of the message is not needed to be modified, the service offloading method for accessing the Internet of the present disclosure includes the following steps.

Step 301 includes that the offloading policy is configured at the UE.

Here, the offloading policy may be: for an application program A, the IP address of corresponding equipment which the application program is in is 10.1.1.1, and the Internet access manner is 3GPP; for an application B, the IP address of corresponding equipment is 20.1.1.1, and the Internet access manner is WLAN.

Step 302 includes that the UE establishes a connection with a gateway 1 and a gateway 2.

Here, establishing a connection is the prior art; successful establishment of a connection may mean that the UE can use a wireless network 1 and the gateway 1 to receive and transmit data, the operating system can find a network interface 1 which is configured with an IP address and can be used, and if the configured IP address is 30.1.1.1, then the corresponding wireless network is in the 3GPP mode; successful establishment of a connection may also mean that the UE can use a wireless network 2 and the gateway 2 to receive and transmit data, the operating system can find another network interface 2 which is configured with the IP address and can be used, and if the configured IP address is 40.1.1.1, then the corresponding wireless network is in the WLAN mode.

Step 303 includes that when the application program A is started, the application program is bound with an interface 1.

Specifically, when the application program A is started, the application program A calls a Berkeley Socket application program interface or an analogue Berkeley Socket application program interface to establish a Socket (Socket is a special name of network programming, more specifically, referring to related development manuals) connection, and then the Socket is bound with the IP address 30.1.1.1 successfully.

Step 304 includes that when the application program A needs to access the Internet to send the message to the corresponding equipment, the application program sets the target address of the message as 10.1.1.1, and sets the source address as 30.1.1.1.

Step 305 includes that the UE determines that address conversion does not need to be performed on the message according to the offloading policy, the message is sent directly.

Here, the processing following the sending of the message is prior art, which may include that the message is delivered to the next processing flow, waiting for receiving a response message; the message is sent to the wireless interface 1, and then enters the wireless network 1 via the wireless interface 1 and reaches the gateway 1; the message is delivered via the gateway 1 to the Internet and finally reaches an application server; the server processes the message and responds to the application program; the response message is routed to the gateway 1 via the Internet, and then reaches a terminal via the wireless network 1 and is received by the wireless interface 1; the UE receives the message via the wireless interface 1.

Step 306 includes that after the UE receives the message, if the UE determines that the message does not need to be corrected, then the message is processed directly.

### Embodiment 4

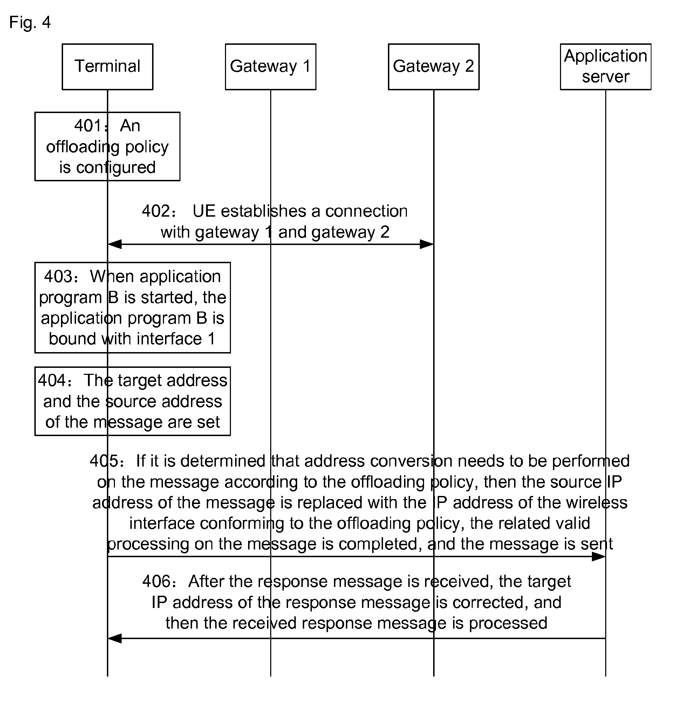

As shown in Fig. 4, when the message is to be sent and the source address of the message needs to be modified, the service offloading method for accessing the Internet of the present disclosure includes the following steps:
step 401: the offloading policy is configured at the UE;

here, the offloading policy and related settings refer to embodiment 1;
step 402: the UE establishes a connection with the gateway 1 and the gateway 2;
step 403: when the application program B is started, the application program is bound with the interface 1;
step 404: when the application program needs to access the Internet to send the message to the corresponding equipment, the application program sets the target address of the message as 20.1.1.1, and sets the source address as 30.1.1.1;
step 405: the UE determines that address conversion needs to be performed on the message according to the offloading policy, the source IP address of the message is replaced with the IP address of the wireless interface conforming to the offloading policy, the related valid processing on the message is completed, and the message is sent;
   for example, the source address 30.1.1.1 of the message needs to be replaced with the IP address 40.1.1.1 of the wireless interface 2, and an IP header and a checksum are recalculated; if the message is a Transmission Control Protocol (TCP) message, it is also needed to recalculate the checksum of the TCP; and
step 406 includes that after receiving the response message, the UE corrects the target IP address of the response message, and then the received response message is processed;
   for example, the target IP address of the message before entering the offloading device is 40.1.1.1, the source address is 20.1.1.1, the address bound to the service corresponding to the message is 30.1.1.1, which shows that the correspondence is not correct, so the offloading device replaces 40.1.1.1 with 30.1.1.1, and recalculates the related checksum.

The above are only the preferred embodiments of the present disclosure and not intended to limit the scope of the claims of the present disclosure.

## Claims

1. A service offloading method for accessing Internet, comprising:
if it is detected that a message is to be sent currently, and it is determined that address conversion needs to be performed on the message according to an offloading policy, then sending the message in a corresponding Internet access manner after a source Internet Protocol (IP) address in the message to be sent is modified;
if it is detected that a message is received currently, and it is determined that the received message needs to be corrected, then processing the received message after a target address of the received message is corrected.

2. The method according to claim 1, wherein the offloading policy comprises one or multiple entries;
wherein each of the one or more entries comprises a service identity and a Internet access manner corresponding to a service.

3. The method according to claim 1, wherein the step of if it is determined that address conversion needs to be performed on the message according to an offloading policy, then sending the message in a corresponding Internet access manner after a source IP address in the message to be sent is modified comprises:
extracting a service identity of the message, extracting from the offloading policy an entry corresponding to the service identity, extracting a local IP address of the message, and checking whether an interface IP address of User Equipment (UE) recorded in the entry is the same as the local IP address; if the same, then sending the message directly in the corresponding Internet access manner; if not the same, then sending the message in the corresponding Internet access manner after the local IP address in the message is converted to the interface IP address of the UE recorded in the entry.

4. The method according to claim 1, wherein the step of processing the received message after a target address of the received message is corrected comprises:
extracting a service identity from the received message, checking a set IP address according to the service identity, and determining whether a local IP address in the received message is the same as the set IP address; if the same, then directly processing the received message; if not the same, then processing the received message after the target IP address in the received message is replaced with a bound IP address.

5. A service offloading device for accessing Internet, comprising an offloading module, a service processing module and a wireless interface module; wherein,
the offloading module is configured to, if it is determined that a message is to be sent currently when the message sent from the service processing module is detected, and it is determined that address conversion needs to be performed on the message according to an offloading policy, send the message to the wireless interface module after a source Internet Protocol (IP) address in the message is modified; the offloading module is configured to, if it is determined that a message is received currently when the message sent from the service processing module is detected, and it is determined that the received message needs to be corrected, send the received message to the service processing module after a target address of the received message is corrected;
the service processing module is configured to send the message to be sent to the offloading module, and process the message sent from the offloading module; and
the wireless interface module is configured to send the received message to the offloading module, and send the message sent from the offloading module in a corresponding Internet access manner.

6. The device according to claim 5, wherein the offloading module comprises an offloading determination sub-module which is configured to save the offloading policy, wherein the offloading policy comprises one or multiple entries, and each of the one or multiple entries comprises a service identity and a Internet access manner corresponding to a service.

7. The device according to claim 6, wherein the offloading module further comprises an address converting sub-module which is configured to receive the message sent from the offloading determination sub-module and an offloading policy entry corresponding to the message, and send the message to the wireless interface module after converting a local IP address to an interface IP address of UE recorded in the entry;
correspondingly, the offloading determination sub-module is configured to extract a service identity of the message sent from the service processing module, extract from the offloading policy the entry corresponding to the service identity, extract the local IP address of the message, and check whether the interface IP address of the UE recorded in the entry is the same as the local IP address; if the same, then send the message to the wireless interface module; if not the same, then send the message and the offloading policy entry corresponding to the message to the address converting sub-module.

8. The device according to claim 7, wherein,
the offloading determination sub-module is configured to extract the service identity from the message received from the wireless interface module, check a set IP address according to the service identity, and determine whether the local IP address in the message is the same as the set IP address; if the same, then send the message to the service processing module; if not the same, then send the message and the set IP address to the address converting sub-module;
correspondingly, the address converting sub-module is configured to receive the message sent from the offloading determination sub-module and the set IP address, and send the message to the service processing module after replacing the local IP address in the message with the set IP address.
